# EUROPEAN PATENT SPECIFICATION

(11) **EP 0 555 168 B1**
(45) Date of publication and mention of the grant of the patent: **12.05.1999**
(21) Application number: 93500008.3
(22) Date of filing: 29.01.1993
(51) Int. Cl.: C01B 25/40

(54) **Process for manufacturing crystal form II solid ammonium polyphosphate**
Verfahren zur Herstellung von festem Ammoniumpolyphosphat der Kristallform II
Procédé pour fabriquer le polyphosphate d'ammonium solide en forme cristalline II

(30) Priority: 30.01.1992 ES 9200188
(43) Date of publication of application: 11.08.1993
(73) Proprietor: Budenheim Iberica, S.L. Sociedad en Comandita, 50784 La Zaida (ES)
(72) Inventor: Mans Fibla, Vicente, E-08915 Badalona (ES); Toral Dalmau, Luisa, E-08911 Badalona (ES)
(74) Representative: Ferregüela Colon, Eduardo

(56) References cited:
- EP-A- 0 088 265
- DE-A- 2 330 174
- C.Y.Shen et al, "Preparation and Characterisation of Crystalline Long-Chain Ammonium Polyphosphate", Journal of the American Chemical Society, 91, pages 62-67, January 1969

## Description

### Field of the invention

The present invention refers to an industrial manufacturing process by means of which an ammonium polyphosphate (APP) of the crystal form II type, characterized by its low solubility in water and its low viscosity in aqueous and organic suspensions, is obtained.

The ammonium polyphosphate, generic chemical formula (NH₄PO₃)ₙ being n>10, 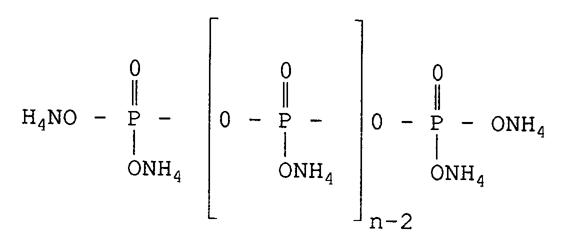 presents different crystalline forms depending on the raw materials and the manufacturing process used. There are several patents describing other manufacturing processes for APP: European patents EP 0 088 264 and EP 0 049 763, German patents DE P2330174.8 and DE P767655.0 and U.S. patent US 3,912,802.

### Description of the prior art

As it is widely known, solid ammonium polyphosphate has been used as flame retardant additive for several decades in the paints and plastics industries. The current increase of applications in both industrial sectors has required an important effort in improving the quality of the raw materials and additives involved in the manufacturing of products.

One of these additives is ammonium polyphosphate. The present invention does not pretend to improve the well-known APP flame retardant properties, intrinsicly related to its chemical structure and composition, but points to the improvement of the physical properties of APP in order to perform better when added in the earlier mentioned fields.

Two of these physical properties are water solubility and viscosity in both aqueous and organic media suspensions.

For its application in intumescent paints, APP water solubility has to be as low as possible, since paints exposed to the weather are in permanent contact with the humidity of the air. The more soluble product the more tendency to be hidrolized and converted into ammonium orthophosphate which is a highly water soluble product, and consequently the paint looses its intumescent capacity somehow.

Referring to the water viscosity, it is important that the addition of APP in water based paints does not increase its viscosity. A high value of the latter makes its application difficult.

As a raw material for flame retarding plastics, it is preferred to use additives that do not modify the original physical properties of the material.

In the field of polyolefines, for example, it is suitable that APP presents a very good thermal stability in order to avoid problems in the extrusion process. Regarding polyurethanes, when APP is formulated together with the polyol, it is important to have a low value of viscosity, specially when using diethylenglycol polyadipate, since a high viscosity would run into difficulties when handling the polyol.

The European patent EP 0 088 265 describes a manufacturing process for APP where P₂0₅ and (NH₄)₂HP0₄ are mixed in an equimolecular ratio in ammonia atmosphere at a temperature range between 100°C and 250°C. According to this process, a product characterized by a solubility in water of 0,8 g/100 ml of suspension and a viscosity in 10% by weight water suspension of 100 mPa.s (= 100 cp) is obtained.

As described in example 1 of the referred patent, the thermal gradient of the process makes it necessary to mantain in the plant a cooling system for the heating fluid or to carry out the polymerization reaction in two different steps, since the last phase of the reaction is carried out at more than 200°C and the initial phase starts at 100°C.

### Description of the invention

According to the present invention the proposal improves the European Patent EP 0 088 265 not only in the product quality but also in energy savings in the process.

Thus, in the process described in the present invention, the following raw materials are used:
- Phosphorous pentoxide and diammonium orthophosphate in equimolecular ratio.
- Ammonium sulphate in a proportion with regard to the former mixture between 0,5 and 5% by weight.
- A stochiometric excess of ammonia gas between 3 and 5% with regard to the initial mixture.

The manufacturing process, according to the invention, presents the following steps:
a) a previous mixing step of the solid raw materials. Duration between 5 and 10 minutes;
b) a second step of polymerization reaction between 15 and 45 minutes with injection of ammonia gas. Maximum reactor pressure between 490-980 Pa (= 50-100 mm.w) at a temperature between 180°C and 200°C;
c) a short homogeneization step without ammonia supply. Duration between 0 and 10 minutes;
d) a final step of polimerization-neutralization between 2 and 4 hours with a supply of ammonia gas at a temperature range of 200°C-220°C and a minimum reactor pressure between 0 and 980 Pa (= 0-100 mm.w).

The resulting product is unloaded from the reactor to a cooler and then milled in order to achieve the desired particle size.

The ammonium polyphosphate (crystal form II) obtained by this procedure, shows the following characteristics:
a) a 10% by weight water solution solubility less than 0,4 g/100 ml suspension.
b) a maximum viscosity in 10% by weight water suspension of 40 mPa.s (= 40 cp).
c) a maximum viscosity in 30% by weight polypropylenglycol suspension of 500 mPa.s (= 500 cp).
d) a maximum viscosity in 30% by weight diethylenglycol polyadipate of 35.000 mPa.s (= 35.000 cp).

Furthermore, the product satisfies the following technical specifications:

| | |
|---|---|
| % Crystal form II | 99% minimum |
| % P₂0₅ total | 71% minimum |
| % N total | 14% minimum |
| pH (10% aqueous sol.) | 5 minimum |

The ammonium polyphosphate obtained by the described process can be considered an optimum product for the application in paints as intumescent catalyst and in plastics as flame retardant additive. In conclusion it improves notably the product presented in the European patent EP 0 088 625.

### Application examples of the manufacturing process

The following example 1 serve to illustrate the present invention. Example 2 and 3 are comparative.

### Example 1

200 kg of P₂0₅ (1,41 Kmol), 186 kg of (NH₄)₂HP0₄ (1,41 Kmol) and 5 kg of (NH₄)₂SO₄ (37,88 mol) are mixed for 5 minutes at 200°C. The mixing is carried out in a preheated reactor of service capacity equal to 0,5 m³, provided with agitation and external heating by thermal fluid.

Next it is supplied for 30 minutes with ammonia gas at a maximum pressure in the reactor of 980 Pa (= 100 mm.w). The average flow, controlled by an automatic valve, is 15 m³/h. In this phase of the reaction, the maximum power consumption is 70 amperes.

The mixture is homogeneized for 8 minutes. Then, it is fed ammonia gas in two steps of two hours and 1 hour 45 minutes. The average flow for each step is 7,5 m³/h and 5 m³/h. The temperature of this phase of the reaction is 220°C.

The total supply of ammonia gas is 32,5 m³ (N.C.), which means a molar excess of 3,1 %.

The operation takes place in a total period of 4 hours and 28 minutes.

### Example 2

The procedure is the same as explained in the example 1, however ammonium sulphate has not been added as raw material.

The product obtained presents solubility and viscosity higher than the one in example 1 (see results in the comparative table).

### Example 3

(Comparable to the example 1 of the European patent EP 0 088 625)

200 kg of P₂0₅ (1,41 Kmol) and 186 kg of (NH₄)₂HP0₄ (1,41 Kmol) are mixed at 100°C in the same reactor as described in the example 1.

For 25 minutes it is supplied 100 m³ of ammonia gas with a maximum pressure in the reactor of 1.470 Pa (= 150 mm.w).

Then, the mixture is homogenizated in nitrogen atmosphere (150 l/min.) for 35 minutes. In a period of 2 hours, it is supplied 14 m³ of ammonia gas.

The power consumption reaches 100 amperes in this phase of the reaction.

The last step is carried out with the supply of 10 m³ of ammonia gas at 230°C and atmospheric pressure. The total NH₃ supply is 34 m³ (N.C.), which means a molar excess of 7,4%.

The operation takes place in 5 hours.

The ammonium polyphosphate so obtained has lower quality than the product resulting from example 1, as shown in the results of the comparative table.

**TABLE OF RESULTS**

| Procedure characteristics | Example 1 | Example 2 (Comparative) | Example 3 (Comparative) |
|---|---|---|---|
| Initial temperature (°C) | 200 | 200 | 100 |
| Final temperature (°C) | 220 | 220 | 230 |
| Max. reactor pressure (Pa) | 980 | 980 | 1.470 |
| Max. reactor pressure (mm.w) | 100 | 100 | 150 |
| Min. reactor pressure (Pa) | 19,6 | 29,4 | -196 |
| Min. reactor pressure (mm.w) | 2 | 3 | -20 |
| Max. power consumption (A) | 70 | 75 | 100 |
| Total time (hours) | 4,47 | 4,47 | 5 |
| Consumption of NH₃ (Nm³) | 32,50 | 32,50 | 34 |

| Product characteristics | | | |
|---|---|---|---|
| pH (10% by w. in water) | 5,5 | 5,6 | 5,8 |
| Solubility (g/100 ml w.) | 0,21 | 0,62 | 0,48 |
| Viscosity (10% by w. in water) (mPa.s = cp) | 18 | 59 | 46 |
| Viscosity (30% by w. in polypropylenglicol) (mPa.s = cp) | 438 | 446 | 470 |
| Viscosity (30% by w. in diethylenglycol polyadipate) (mPa.s = cp) | 25.000 | 32.000 | 38.000 |

## Claims

1. Manufacturing process of long chain ammonium polyphosphate of crystal form II using as raw materials phosphorous pentoxide (P₂0₅), diammonium orthophosphate ((NH₄)₂HP0₄) and ammonium sulphate ((NH₄)₂SO₄) in a molar ratio 1/1/0,01-0,08 in ammonia gas atmosphere (NH₃), following these steps:
a) initial mixing step of solid raw materials for a period of time between 5 and 10 minutes;
b) a second step of polymerisation reaction between 15 and 45 minutes with a supply of ammonia gas at a maximum reactor pressure of 490-980 Pa (= 50-100 mm.w) and at a minimum temperature of 180°C - 200°C.;
c) a short homogenization step without ammonia supply; duration between 0 and 10 minutes;
d) a final step between 2 and 4 hours with a supply of ammonia gas at a temperature range of 200°C-220°C and a minimum reactor pressure between 0 and 980 Pa (= 0-100 mm.w);
the maximum thermal gradient of the process is 40°C and the molar excess of ammonia gas has a maximum value of 5%.

2. Ammonium polyphosphate of crystal form II, obtained by the process of claim 1, which presents the following characteristics:
a) solubility in 10% by weight APP water suspension less than 0,4 g APP/100 ml suspension;
b) maximum viscosity in water (10% suspension) of 40 mPa.s (= 40 cp);
c) maximum viscosity in polypropylenglycol (30% suspension) of 500 mPa.s (= 500 cp); and
d) maximum viscosity in diethylenglycol polyadipate (30% suspension) of 35.000 mPa.s (= 35.000 cp).

## Patentansprüche

1. Verfahren zur Herstellung von langkettigem Ammoniumpolyphosphat der Kristallform II unter Verwendung von Phosphorpentoxid (P₂O₅), Diammoniumorthophosphat ((NH₄)₂ HPO₄) und Ammoniumsulfat ((NH₄)₂ SO₄) in einem Molverhältnis von 1/1/0,01-0,08 in Ammoniakgasatmosphäre (NH₃) als Ausgangsmaterialien, unter Befolgung der folgenden Schritte:
a) anfänglicher Vermischungsschritt von festen Ausgangsmaterialien während eines Zeitraums zwischen 5 und 10 Minuten;
b) zweiter Schritt der Polymerisationsreaktion zwischen 15 und 45 Minuten mit einer Zufuhr von Ammoniakgas bei einem maximalen Reaktordruck von 490 - 980 Pa (= 50-100 mm.w) und bei einer minimalen Temperatur von 180°C - 200°C;
c) kurzer Homogenisierungsschritt ohne Ammoniakzufuhr; Dauer zwischen 0 und 10 Minuten;
d) letzter Schritt zwischen 2 und 4 Stunden mit einer Zufuhr von Ammoniakgas bei einer Temperatur im Bereich von 200°C - 220°C und einem minimalen Reaktordruck zwischen 0 und 980 Pa (= 0-100 mm.w);
wobei der maximale Temperaturgradient des Verfahrens 40°C beträgt und der molare Überschuß von Ammoniakgas einen maximalen Wert von 5% ausmacht.

2. Ammoniumpolyphosphat der Kristallform II, erhalten durch ein Verfahren gemäß Anspruch 1, welches die folgenden Eigenschaften aufweist:
a) Löslichkeit in 10 Gew.-% APP-Wassersuspension von weniger als 0,4 g APP/10 ml Suspension;
b) maximale Viskosität in Wasser (10%ige Suspension) von 40 mPa·s (= 40 cp);
c) maximale Viskosität in Polypropylenglykol (30%ige Suspension) von 500 mPa·s (= 500 cp); und
d) maximale Viskosität in Diethylenglykolpolyadipat (30%ige Lösung) von 35.000 mPa·s (= 35.000 cp).

## Revendications

1. Un procédé de fabrication de polyphosphate d'ammonium à chaîne longue de forme cristalline II en utilisant, en tant que matières premières, du pentoxyde de phosphore (P₂O₅), de l'orthophosphate de diammonium (NH₄)₂HPO₄) et du sulfate d'ammonium ((NH₄)₂SO₄) selon un rapport molaire 1/1/0,01-0,08 dans une atmosphère d'ammoniac gazeux (NH₃) en effectuant les étapes suivantes :
a) une étape de mélange préalable des matières premières brutes solides pendant une période comprise entre 5 et 10 minutes ;
b) une seconde étape de réaction de polymérisation entre 15 et 45 minutes avec apport de gaz ammoniac sous une pression maximum du réacteur comprise entre 490-980 Pa (50-100 mm. d'eau) et à une température minimum de 180°C-200°C;
c) une courte étape d'homogénéisation sans apport d'ammoniac ; durée de 0 et 10 minutes ;
d) une étape finale de 2 à 4 heures avec apport de gaz d'ammoniac à une température comprise entre 200°C-220°C et une pression maximum de réacteur comprise entre 0 et 980 Pa (0-100 mm. eau),
le gradient thermique maximum du procédé est de 40°C et l'excès molaire de gaz d'ammoniac atteint une valeur maximum de 5 %.

2. Polyphosphate d'ammonium sous forme cristalline II, obtenu par le procédé selon la revendication 1 qui présente les caractéristiques suivantes :
a) solubilité dans une suspension aqueuse à 10 % en poids d'APP inférieure à 0,4 g d'APP/100 ml de suspension ;
b) viscosité maximum dans l'eau (suspension à 10 %) de 40 mPa.s (=40 cp) ;
c) viscosité maximum dans le polypropylèneglycol (suspension à 30 %) de 500 mPa.s (=500 cp) et
d) viscosité maximum dans le polyadipate de diéthylèneglycol (suspension à 30 %) de 35 000 mPa.s (=35 000 cp).
